# EUROPÄISCHE PATENTSCHRIFT

(11) **EP 1 095 816 B1**
(45) Veröffentlichungstag und Bekanntmachung des Hinweises auf die Patenterteilung: **29.12.2004**
(21) Anmeldenummer: 00121746.2
(22) Anmeldetag: 05.10.2000
(51) Int. Cl.: B60N 2/427, B60N 2/48

(54) **Kopfstützenanordnung für einen Fahrzeugsitz**
Headrest assembly for a vehicle seat
Agencement d'appui-tête pour un siège de véhicule

(30) Priorität: 25.10.1999 DE 29918761 U
(43) Veröffentlichungstag der Anmeldung: 02.05.2001
(73) Patentinhaber: F.S. Fehrer GmbH & Co. KG, 97318 Kitzingen/Main (DE); Bayerische Motoren Werke Aktiengesellschaft, 80809 München (DE)
(72) Erfinder: Messner, Manfred, 80469 München (DE); Klühspies, Roland, 97199 Ochsenfurt (DE); Popp, Wolfgang, 91438 Bad Windsheim (DE); Scheller, Friedrich, 97346 Iphofen (DE); Leneis, Thomas, 85669 Reithofen (DE); Tobisch, Franz, 81541 München (DE)
(74) Vertreter: Böck, Bernhard, Dipl.-Ing.

(56) Entgegenhaltungen:
- EP-A- 0 888 926
- DE-U- 29 603 991
- DE-U- 29 808 831
- GB-A- 2 316 863
- US-A- 3 802 737

## Beschreibung

Die vorliegende Erfindung betrifft eine Kopfstützenanordnung für einen Fahrzeugsitz aufweisend zumindest eine Rückenlehne und eine Kopfstützeneinrichtung.

Fahrzeugsitze weisen häufig Kopfstützen auf, die am oberen Ende einer Rückenlehne befestigt sind. Dabei kommen verschiedene Befestigungsmöglichkeiten in Betracht. So kann die Kopfstütze fest mit der Rückenlehne verbunden sein oder aber auch höhenverstellbar und schwenkbar ausgeführt sein, um der Anatomie verschiedener Fahrzeuginsassen angepaßt werden zu können.

Bei herkömmlichen Fahrzeugsitzen besteht das Problem, daß der Abstand zwischen dem Hinterkopf eines Fahrzeuginsassen und der Kopfstütze in Abhängigkeit von der Sitzposition des Fahrzeuginsassen unter Umständen sehr groß sein kann. Dieses Problem tritt insbesondere, aber nicht ausschließlich, bei Fahrzeugsitzen auf, bei denen die Neigung der Rückenlehne unterschiedlich gewählt werden kann.

Ein großer Abstand zwischen dem Hinterkopf und der Kopfstütze ist jedoch im Falle eines Unfalls, insbesondere im Falle eines Heckaufpralls, für die Fahrzeuginsassen sehr gefährlich. Im Falle eines Aufpralls tritt nämlich eine starke Relativbeschleunigung zwischen der Kopfstütze und dem Kopf des Fahrzeuginsassen auf, die zu einem harten Zusammenprall des Hinterkopfs mit der Kopfstütze führt. Schwere Schädelverletzungen können die Folge sein.

Eine Lösung zur Vermeidung eines großen Abstands zwischen Hinterkopf und Kopfstütze wird in der DE 298 08 831 U1 vorgeschlagen. Der dort beschriebene Fahrzeugsitz weist eine zweigeteilte Rückenlehne auf. Ein oberer Teil der Rückenlehne, an dem die Kopfstütze befestigt ist, ist drehbar gegenüber einem unteren Teil der Rückenlehne ausgeführt. Dabei wird der obere Teil durch eine Feder in eine vordere Ruheposition gedrückt und ist durch ein Anlehnen des Fahrzeuginsassen nach hinten schwenkbar. Nachteilig bei diesem System ist der hohe Fertigungsaufwand. Um nämlich einen möglichst effektiven Schutz bei Unfällen zu gewährleisten, ist nicht nur der Einbau eines Federmittels sondern auch eines Stoßdämpfers nötig. Darüber hinaus ist die dort beschriebene Konstruktion für Fahrzeugrücksitze nur bedingt geeignet. Schließlich kann der bewegliche Aufbau der Rückenlehne von manchen Fahrzeuginsassen als störend empfunden werden.

Aus der DE 296 03 991 U ist ein Fahrzeugsitz mit einer gelenkig oder verschiebbar an der Rückenlehne angeordneten Kopfstütze bekannt, wobei die Verschwenkung oder Verschiebung der Kopfstütze über ein Zugmittel, beispielsweise ein Zugband, erfolgt, das in der Rückenlehne zwischen der Kopfstütze und dem Sitz verspannt ist. Bei einer Verformung des Sitzpolsters der Rückenlehne wird über das über das Zugmittel die Kopfstütze aus ihrer Ruhelage entgegen der Aufprallrichtung der Insassen bewegt. Auch bei dieser bekannten Anordnung ist eine bewegliche Anordnung der Kopfstütze an der Rückenlehne notwendig.

Aus der gattungsbildenden US 3 802 737 A ist eine Kopfstützenanordnung bekannt, wobei durch Verformung der Rückanlehne- Tragstruktur die Kopfstütze bewogen wird.

Es ist die Aufgabe der vorliegenden Erfindung, eine Kopfstützenanordnung für ein Fahrzeug zu schaffen, die das Verletzungsrisiko für den Hals- und Nackenbereich eines Fahrzeuginsassen bei einem Unfall verringert und sich darüber hinaus durch einen einfachen Aufbau auszeichnet.

Diese Aufgabe wird durch eine Kopfstützenanordnung mit den Merkmalen des Anspruchs 1 gelöst.

Die Erfindung beruht im wesentlichen darauf, dass eine mechanische Übertragungseinrichtung eine Verformung der Rückenlehne in eine gegensinnige Bewegung der Kopfstützeneinrichtung umsetzt, und so die Kopfstützeneinrichtung auf den Hinterkopf des Fahrzeuginsassen zu bewegt. Die Verformung der Rückenlehne wird dabei durch die Trägheitskräfte, die ein Fahrzeuginsasse zum Beispiel bei einem Heckaufprall auf die Rückenlehne ausübt, bewirkt. Es handelt sich also um ein rein passives System, welches keinerlei aktive Komponenten benötigt. Der Vorteil eines minimalen Wartungsaufwandes kann deshalb zusammen mit einer sehr hohen Zuverlässigkeit des Systems realisiert werden. Aber auch fertigungstechnisch lässt sich die erfindungsgemäße Sitz- und Kopfstützenanordnung relativ leicht herstellen, da sie nur wenige Bauteilgruppen aufweist.

Erfindungsgemäß weist zur Ausbildung der Übertragungseinrichtung die Rückenlehne eine verformbare Tragstruktur auf, die sich in einem biegesteifen Übergangsbereich zwischen der Rückenlehne und der Kopfstützeneinrichtung an einer Auflagereinrichtung abstützt. Die Tragstruktur bildet den mechanisch stabilen Teil der Rückenlehne und kann zur Verbesserung des Sitzkomforts mit einer Polsterung versehen werden. Die Tragstruktur verformt sich bei einem Unfall und mittels der mechanischen Übertragungseinrichtung wird die Kopfstützeneinrichtung bewegt. Die Tragstruktur kann dabei in beliebiger Weise, beispielsweise flächig oder gitterförmig, ausgeführt sein und anschließend auf an sich bekannte Weise mit Polstermaterialien umschäumt werden. Eine flächige Bauform der Tragstruktur kann auch Löcher aufweisen, so daß das Umschäumen leichter und dauerhafter durchgeführt werden kann.

Es erweist sich als besonders vorteilhaft, die Tragstruktur als schalenartig geformte Trägerschale auszuformen. Hierdurch ist es besonders leicht möglich, die Rückenlehne in der Formgebung der Anatomie des Rückens anzupassen und damit einen besonders bequemen Fahrzeugsitz zu realisieren. Insbesondere erweist es sich als vorteilhaft, daß bei einer derartigen Rückenlehne die Polsterung über die gesamte Fläche der Rückenlehne im wesentlichen gleich dick ausgeführt werden kann, was fertigungstechnische Vorteile bringt.

Die Kopfstützeneinrichtung kann über Befestigungsmittel mit der Tragstruktur verbunden sein, so daß zur Realisierung der Kopfstützenanordnung auf bekannte Kopfstützeneinrichtungen zurückgegriffen werden kann.

Ein besonders einfacher Aufbau ergibt sich, wenn zumindest ein Teil der Kopfstützeneinrichtung aus einem entsprechend geformten Teil der Tragstruktur gebildet ist. Ein solcher einstückiger, integraler Aufbau ermöglicht eine besonders kostengünstige Produktion. Eine eventuell notwendige Aussteifung in einem Übergangsbereich zwischen der Tragstruktur und der Kopfstützeneinrichtung läßt sich beispielsweise dadurch realisieren, daß das Material im Bereich der Kopfstützeneinrichtung einen größeren Querschnitt aufweist, oder aber im Übergangsbereich Aussparungen vorgesehen sind, in welche zusätzliche Versteifungselemente eingebracht sind.

Es ist besonders vorteilhaft, eine Anschlageinrichtung vorzusehen, welche die Verformbarkeit der Rückenlehne begrenzt. Mit einer solchen Anschlageinrichtung kann die Bewegung der Rückenlehne soweit begrenzt werden, daß der Oberkörper bei einem Unfall in im wesentlichen senkrechter Lage verbleibt, in der die bei einem Aufprall auftretenden Beschleunigungen für die Fahrzeuginsassen mit dem geringsten Verletzungsrisiko verbunden sind. Gleichzeitig kann eine solche Anschlageinrichtung auch die Auflagereinrichtung der mechanischen Übertragungseinrichtung darstellen, welche im Zusammenwirken mit der Tragstruktur der Rückenlehne die Verformung der Rückenlehne in eine Bewegung der Kopfstützeneinrichtung umsetzt. Beispielsweise kann die Anschlageinrichtung in einem sehr einfachen Fall aus einem an der Karosserie angebrachten Profil bestehen, auf dem sich, im Falle einer direkt an der Rückenlehne befestigten Kopfstützeneinrichtung, der Übergangsbereich zwischen Kopfstützeneinrichtung und Rückenlehne abstützt. So wird eine rückwärtsgerichtete Verformung der Rückenlehne auf einfachste Art in eine Vorwärtsbewegung der Kopfstützeneinrichtung umgesetzt. Es sind jedoch auch andere Ausführungsweisen der Anschlageinrichtung möglich, wie z. B. das Verwenden eines Drehgelenks.

Um eine für den Rücken anatomisch übermäßige Verformung der Rükkenlehne zu vermeiden, die ihrerseits Verletzungen im Rückenbereich des Fahrzeuginsassen bewirken könnte, zeichnet sich eine besonders zu bevorzugende Ausführungsform der Anschlageinrichtung dadurch aus, daß diese muldenförmig ausgeführt ist. Dadurch ist die Rückenlehne in ihrer maximal verformten Stellung ebenfalls muldenförmig geformt, so daß das Verletzungsrisiko gemindert wird. Insbesondere kann eine solche muldenförmige Anschlageinrichtung im wesentlichen flächig ausgeführt sein. Da in der Regel bei jeder Art von Fahrzeugsitz ohnehin eine möglichst stabile und möglichst flächige Struktur vorzusehen ist, die Schutz vor losen Teile bietet, die bei einem Unfall nach vorne fliegen können, ist eine solche muldenförmige Anschlageinrichtung ohne großen zusätzlichen Aufwand realisierbar.

Vorteilhaft ist es auch, wenn für die Kopfstützenanordnung der Aufbau der Tragstruktur der Rückenlehne beziehungsweise die für die Rückenlehne sowie die Tragstruktur verwendeten Werkstoffe so gewählt sind, daß die Rückenlehne energiedissipativ wirkt. Dadurch kann bereits während sich die Rückenlehne bei einem Unfall verformt, ein Abbremsen des Fahrzeuginsassen erreicht werden, so daß die maximal auf den Fahrzeuginsassen wirkenden Beschleunigungskräfte verringert werden. Der Fahrzeugsitz wirkt also als zusätzliche Knautschzone und ist deshalb besonders sicher.

Wenn die Kopfstützenanordnung an einem Rücksitz angeordnet ist, kann die Rückenlehne gleichzeitig zur Ausbildung einer Abgrenzung zwischen dem Fahrgastraum und dem Kofferraum genutzt werden.

Nachfolgend wird die vorliegende Erfindung beispielhaft anhand von Ausführungsformen der erfindungsgemäßen Kopfstützenanordnung unter Bezugnahme auf die beigefügten Zeichnungen beschrieben. Es zeigen:
- **Fig. 1**: eine erste Ausführungsform einer Kopfstützenanordnung im Querschnitt von der Seite aus gesehen und in unverformtem Zustand;
- **Fig. 2**: die in **Fig. 1** dargestellte Kopfstützenanordnung in verformtem Zustand;
- **Fig. 3**: eine zweite Ausführungsform einer Kopfstützenanordnung im Querschnitt von der Seite aus gesehen und in unverformtem Zustand.

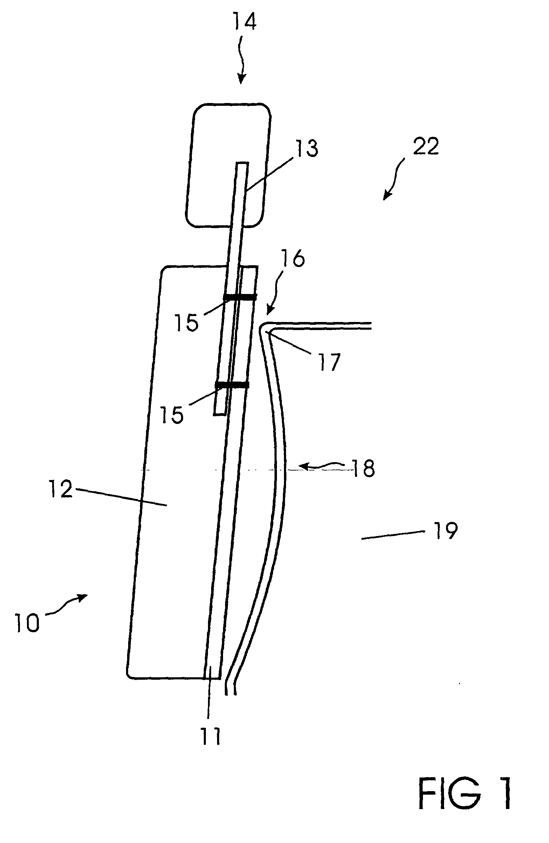

**Fig. 1** zeigt in stark vereinfachter Form die wesentlichen Bauteile einer Kopfstützenanordnung 22, die an einem Fahrzeugsitz im Fahrzeugfond angeordnet ist. Die Kopfstützenanordnung 22 weist eine Rückenlehne 10 auf mit einer als Trägerschale 11 ausgeführten Tragstruktur, auf der ein Polster 12 befestigt ist. Die Befestigung des Polsters 12 kann auf an sich bekannte Weise, beispielsweise durch Umschäumen der Trägerschale 11, erfolgen. Am oberen Ende der Rückenlehne 10 befindet sich eine hier als separates Bauteil ausgeführte Kopfstütze 14, welche mittels Befestigungsstangen 13 an der Trägerschale 11 befestigt ist. Die Befestigung der Befestigungsstangen 13 an der Trägerschale 11 erfolgt im dargestellten Ausführungsbeispiel durch eine Schraub- oder Klemmverbindung 15. Die Kopfstütze 14 kann relativbeweglich gegenüber der Trägerschale 11 ausgeführt oder starr mit der Trägerschale 11 verbunden sein.

Der Rückenlehne 10 gegenüberliegend befindet sich eine mit definierter Steifigkeit bzw. Nachgiebigkeit ausgebildete Anschlageinrichtung 18. Diese kann beispielsweise aus profilierten Blech bestehen. Im dargestellten Ausführungsbeispiel ist die Anschlageinrichtung 18 schalenartig geformt und stellt gleichzeitig die Trennwand zwischen einem Kofferraum 19 und dem Fahrgastraum dar. Die dargestellte Anschlageinrichtung 18 weist einen Kontaktsteg 17 auf, an dem sich ein Übergangsbereich 16 der Rückenlehne 10 abstützen kann. Dieser Übergangsbereich 16 stellt den oberen Teil der Rückenlehne 10 dar, bei dem die Rückenlehne 10 in die Halteeinrichtung der Kopfstütze 14 übergeht.

Im dargestellten Ausführungsbeispiel ist die Trägerschale 11 eben, die Anschlageinrichtung 18 dagegen schalenartig ausgeführt. Es ist ebenso möglich, die Trägerschale 11 schalenartig und die Anschlageinrichtung 18 eben auszuführen. Auch ist es möglich, sowohl die Trägerschale 11 als auch die Anschlageinrichtung 18 schalenartig auszuführen.

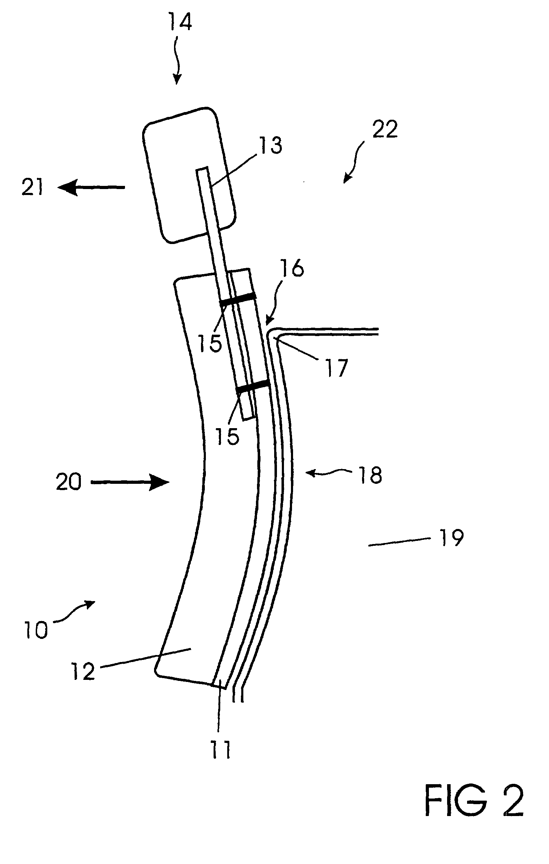

Wie insbesondere aus **Fig. 2** ersichtlich, dient der Kontaktsteg 17 dazu, die Verformung der Rückenlehne 10, die im Fall einer Beschleunigung durch die vom Oberkörper eines Fahrgastes verursachte Trägheitskraft 20 bewirkt wird, in eine Vorwärtsbewegung 21 der Kopfstütze 14 umzusetzen. Die Trägheitskraft 20 wird dabei insbesondere bei einem Heckaufprall vom Fahrzeuginsassen auf die Rückenlehne 10 ausgeübt.

Dieser umlenkend wirkende Effekt kann nicht nur mit einem Kontaktsteg 17 erzielt werden, sondern auch durch andere geeignete Anschlageinrichtungen. Darüber hinaus kann die Anschlageinrichtung 18 nicht nur flächig, sondern auch gitterartig, netzartig oder auch rahmenartig ausgebildet sein.

In **Fig. 2** ist als zusätzliche Funktion der Anschlageinrichtung 18 zu erkennen, daß sie eine maximale Verformung der Rückenlehne 10 definiert. Dadurch kann es insbesondere nicht zu Rückenverletzungen des Fahrzeuginsassen kommen, die durch eine übermäßige oder aber auch anatomisch ungünstige und unregelmäßige Verformung der Rückenlehne 10 entstehen könnten. Darüber hinaus ergibt sich aus der definierten Maximalverformung eine Begrenzung der Vorwärtsbewegung 21 der Kopfstütze 14, so daß ein übermäßig harter Aufprall der Kopfstütze 14 auf den Hinterkopf des Fahrzeuginsassen vermieden werden kann.

Die Rückenlehne 10 bzw. die Trägerschale 11 kann aus beliebigen geeigneten Materialien bestehen und sowohl flächig als auch rahmenartig, gitterartig, netzartig oder mit einer Struktur versehen ausgeführt sein, oder auch aus geeignetem Verbundmaterial gefertigt sein. Bei einem entsprechenden Aufbau der Rückenlehne 10 beziehungsweise einer entsprechenden Materialwahl wirkt die Rückenlehne 10 während ihrer Verformung energiedissipativ. Dadurch kann die kinetische Energie des Fahrzeuginsassen über eine größere Wegstrecke hinweg abgebaut werden, so daß der Fahrzeugsitz zumindest im Falle eines Heckaufpralls als zusätzliche Knautschzone fungiert.

Im dargestellten Ausführungsbeispiel der Sitz- und Kopfstützenanordnung 22 als Rücksitz dient die Anschlageinrichtung 18 gleichzeitig als Trennwand zwischen dem Kofferraum 19 und dem Fahrgastraum. Da eine solche Trennwand in jedem Fall vorzusehen ist und eine entsprechende Stabilität aufweisen muß, damit beispielsweise bei einem Unfall im Kofferraum mitgeführte Gepäckstücke nicht zum Verletzungsrisiko werden können, wird ein besonders einfacher Aufbau der erfindungsgemäßen Sitz- und Kopfstützeneinrichtung gefördert. Entsprechendes gilt auch für Vordersitze, da auch hier ein Schutz der Fahrzeuginsassen zum Beispiel gegenüber auf der Rücksitzbank befindlichen Gegenständen vorzusehen ist.

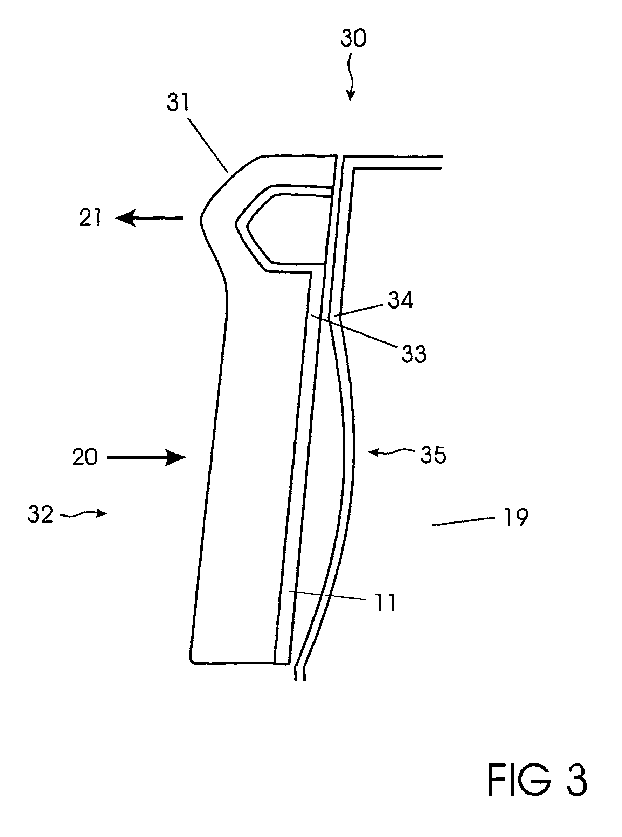

**Fig. 3** zeigt eine ebenfalls als Rücksitz einsetzbare Kopfstützenanordnung 30. Abweichend von der bereits unter Bezugnahme auf die **Fig. 1** und **Fig. 2** beschriebenen Kopfstützenanordnung 22 ist eine Kopfstütze 31 integral an eine Rückenlehne 32 angeformt, derart, daß der obere Teil der Tragstruktur die Kopfstütze 31 bildet. Auch hier stützt sich ein Übergangsbereich 33 an einem Kontaktsteg 34, der den oberen Rand einer Anschlageinrichtung 35 darstellt, ab, so daß bei einem Unfall die auf die Rückenlehne 32 ausgeübte Trägheitskraft 20 in eine Vorwärtsbewegung 21 der Kopfstütze 31 umgesetzt wird.

## Patentansprüche

1. Kopfstützenanordnung für einen Fahrzeugsitz aufweisend zumindest eine Rückenlehne (10, 32) und eine Kopfstützeneinrichtung (14, 31), mit einer mechanischen Übertragungseinrichtung zur Umsetzung einer Verformung der Rückenlehne (10, 32) in eine Bewegung der Kopfstützeneinrichtung (14, 31), wobei zur Ausbildung der Übertragungseinrichtung die Rückenlehne (10, 32) eine verformbare Tragstruktur (11) aufweist, **dadurch gekennzeichnet, dass** die Tragstruktur (11) sich in einem Übergangsbereich (16, 33) zwischen der Rückenlehne und der Kopfstützeneinrichtung (14, 31) an einer Auflagereinrichtung (17, 34) abstützt.

2. Kopfstützenanordnung nach Anspruch 1,
**dadurch gekennzeichnet,**
**dass** die Tragstruktur (11) als schalenartig geformte Trägerschale ausgeführt ist.

3. Kopfstützenanordnung nach Anspruch 1 oder 2,
**dadurch gekennzeichnet,**
**dass** die Kopfstützeneinrichtung (14) über Befestigungsmittel (15) mit der Tragstruktur verbunden ist.

4. Kopfstützenanordnung nach Anspruch 1 oder 2,
**dadurch gekennzeichnet,**
**dass** ein Teil der Tragstruktur (11) einen Teil der Kopfstützeneinrichtung (31) bildet.

5. Kopfstützenanordnung nach einem der Ansprüche 1 bis 4,
**dadurch gekennzeichnet,**
**dass** eine Anschlageinrichtung (18, 35) die Verformbarkeit der Rückenlehne (10) begrenzt.

6. Kopfstützenanordnung nach Anspruch 5,
**dadurch gekennzeichnet,**
**dass** die Anschlageinrichtung (18, 35) muldenförmig ausgeführt ist.

7. Kopfstützenanordnung nach einem der Ansprüche 1 bis 6,
dadurch gekennzei chnet,
dass sie an einem Rücksitz ausgeführt ist.

## Claims

1. A headrest arrangement for a vehicle seat comprising at least one backrest (10, 32) and a headrest device (14, 31), comprising a mechanical transmission device for transformation of a deformation of the backrest (10, 32) into a movement of the headrest device (14, 31), wherein for forming the transmission device the backrest (10, 32) has a deformable support structure (11), **characterized in that** the support structure (11) is supported in a transition area (16, 33) between the backrest and the headrest device (14, 31) on a contact device (17, 34).

2. The headrest arrangement according to claim 1, **characterized in that** the support structure (11) is formed as a shell-like support shell.

3. The headrest arrangement according to claim 1 or 2, **characterized in that** the headrest device (14) is connected by fastening means (15) to the support structure.

4. The headrest arrangement according to claim 1 or 2, **characterized in that** a part of the support structure (11) forms a part of the headrest device (31).

5. The headrest arrangement according to one of the claims 1 to 4, **characterized in that** a stop device (18, 35) limits the deformability of the backrest (10).

6. The headrest arrangement according to claim 5, **characterized in that** the stop device (18, 35) is cavity-shaped.

7. The headrest arrangement according to one of the claims 1 to 6, **characterized in that** it is provided on a backseat.

## Revendications

1. Agencement pour appuie-tête pour un siège de véhicule présentant au moins un dossier (10, 32) et un dispositif d'appuie-tête (14, 31), avec un dispositif de transmission mécanique pour la conversion d'une déformation du dossier (10, 32) en un mouvement du dispositif d'appuie-tête (14, 31), le dossier (10, 32) comportant une structure de support déformable (11) pour former le dispositif de transmission, **caractérisé en ce que** la structure de support (11) s'appuie sur un dispositif d'appui (17, 34) dans une région de transition (16, 33) entre le dossier et le dispositif d'appuie-tête (14, 31).

2. Agencement pour appuie-tête selon la revendication 1, **caractérisé en ce que** la structure de support (11) est réalisé sous la forme d'une coquille de support façonnée à la manière d'une coquille.

3. Agencement pour appuie-tête selon la revendication 1 ou 2, **caractérisé en ce que** le dispositif d'appuie-tête (14) est assemblé à la structure de support par des moyens de fixation (15).

4. Agencement pour appuie-tête selon la revendication 1 ou 2, **caractérisé en ce qu'**une partie de la structure de support (11) forme une partie du dispositif d'appuie-tête (31).

5. Agencement pour appuie-tête selon l'une quelconque des revendications 1 à 4, **caractérisé en ce qu'**un dispositif de butée (18, 35) limite la déformabilité du dossier (10).

6. Agencement pour appuie-tête selon la revendication 5, **caractérisé en ce que** le dispositif de butée (18, 35) est réalisé en forme de cuvette.

7. Agencement pour appuie-tête selon l'une quelconque des revendications 1 à 6, **caractérisé en ce qu'**il est réalisé sur un siège arrière.
